# EUROPEAN PATENT APPLICATION

(11) **EP 4 773 478 A1**
(43) Date of publication of application: **08.07.2026**
(21) Application number: 24857952.6
(22) Date of filing: 14.06.2024
(51) Int. Cl.: H02K 3/28, H02K 3/12, H02K 1/16

(54) **STATOR ASSEMBLY, ELECTRIC MOTOR AND VEHICLE**

(30) Priority: 28.08.2023 CN 202311092467
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: HE, Haijiao, Hangzhou Bay New Zone Ningbo, Zhejiang 315336 (CN); MAO, Weina, Hangzhou Bay New Zone Ningbo, Zhejiang 315336 (CN); ZHU, Dianye, Hangzhou Bay New Zone Ningbo, Zhejiang 315336 (CN); LAN, Xiaodong, Hangzhou Bay New Zone Ningbo, Zhejiang 315336 (CN)
(74) Representative: Boult Wade Tennant LLP
(86) International application number: PCT/CN2024/099444
(87) International publication number: WO 2025/044407

(57) **Abstract**

The present invention provides a stator assembly, an electric motor and a vehicle, and relates to the technical field of vehicles. The stator assembly includes a stator core and polyphase windings that surround the stator core, the stator core is provided with multiple stator slots along a circumferential direction thereof, each stator slot has M slot layers arranged in a radial direction of the stator core, windings of each phase include N branches connected in parallel, and each branch includes a first coil section and a second coil section which are connected; each of the first coil section and the second coil section includes Q winding portions and Q connecting sections, the Q winding portions are arranged in the circumferential direction of the stator core, each connecting section connects two adjacent winding portions, such that the winding portions and the connecting section form multiple variable-pitch units in corresponding slot layers; the slot layers corresponding to the two adjacent winding portions are one of the same layer, adjacent layers, or separated layers. Sizes of end portions of windings of the stator core are reduced, welding spots are avoided, a structure and size are compact, electric potentials of branches are balanced with no circulating current.

## Description

This application claims priority to Chinese Patent Application No. 202311092467.9, filed with the China National Intellectual Property Administration on August 28, 2023, and titled "STATOR ASSEMBLY, ELECTRIC MOTOR AND VEHICLE", which is incorporated by reference in its entirety.

### TECHNICAL FIELD

Embodiments of the present invention relate to, but are not limited to, the technical field of vehicles and, in particular, to a stator assembly, an electric motor and a vehicle.

### BACKGROUND

Electric vehicles have leading advantages over traditional fuel vehicles in terms of power performance, intelligence and usage cost. However, a disadvantage of long charging time limits the promotion of the electric vehicles. To enhance a driving range of the electric vehicles and increase power density of an electric vehicle drive system, a drive motor is usually a flat wire motor. A stator assembly of the flat wire motor consists of a stator core and polyphase windings. The stator core is circumferentially distributed with multiple stator slots, and each stator slot is provided with multiple layers of wires that form the polyphase windings.

The wires have multiple lead ends relative to the stator core, and the multiple lead ends need to be welded together.

However, the welding process at the lead end of the wires is complex and the length of the lead end of the wires is relatively long, resulting in more material loss and affecting the power generation efficiency of an electric motor.

### SUMMARY

The present invention provides a stator assembly, an electric motor and a vehicle. Sizes of end portions of windings of the stator core are small, a structure of the windings is relatively compact and a connection convenience at a lead end is relatively high.

To achieve the above-mentioned objectives, the present invention provides the following technical solutions.

A first aspect of the present invention provides a stator assembly, which is applied to an electric motor, the stator assembly includes a stator core and polyphase windings that surround the stator core, the stator core is provided with multiple stator slots along a circumferential direction thereof, each stator slot has M slot layers arranged in a radial direction of the stator core, where M is greater than or equal to 4 and is an even number;
windings of each phase include N branches connected in parallel, and each branch includes a first coil section and a second coil section which are connected; a line section of the first coil section is wound around the stator core for M/2 turns in a first direction, and a line section of the second coil section is wound around the stator core for M/2 turns in a second direction, where N is less than or equal to M and the first direction and the second direction are different;
each of the first coil section and the second coil section includes Q winding portions and Q connecting sections, the Q winding portions are arranged in the circumferential direction of the stator core, each connecting section connects two adjacent winding portions, such that the winding portions and the connecting section form multiple variable-pitch units in corresponding slot layers, where Q =M*P, and P is a number of pole pairs of the electric motor; the slot layers corresponding to the two adjacent winding portions are one of the same layer, adjacent layers, or separated layers;
the multiple variable-pitch units include one or more of a short pitch unit, an integer pitch unit and a long pitch unit, where a span of the short pitch unit is smaller than a pole pitch of the electric motor, a span of the integer pitch unit is equal to the pole pitch of the electric motor, and a span of the long pitch unit is larger than the pole pitch of the electric motor.

The stator assembly provided by the embodiments of the present invention has at least the following beneficial effects.

By winding continuous windings around the stator slots of the stator core, specifically utilizing a specific winding direction and the number of turns of a connected first coil section and second coil section along an outer circumferential direction of the stator core, and controlling and changing different types of winding pitches of a winding portion and a connecting section contained in the first and second coil sections within a slot layer, the stator assembly containing a specific winding form is formed. Compared with the hair-pin (hair-pin) windings in the mainstream related technology, a length size of a lead end extending from an end portion of the stator core is significantly reduced, thereby improving a convenience of wire connection.

In a possible implementation, the first coil section and the second coil section are connected by a connected segment, and a winding direction of the connected segment is the same as the first direction.

In a possible implementation, the first direction and the second direction are opposite.

In a possible implementation, a lead end of the first coil section and a lead end of the second coil section are located in a same slot layer.

In a possible implementation, the lead end of the first coil section and the lead end of the second coil section are located in an innermost layer or an outermost layer of the slot layer.

In a possible implementation, a span y1 of the short pitch unit is equal to τ-1 or τ-2, a span y1 of the long pitch unit is equal to τ+1 or τ+2, and a span y1 of the integer pitch unit is equal to τ, where τ is the pole pitch of the electric motor.

In a possible implementation, the number of the stator slots is 54, the number of magnetic poles is 6, and the pole pitch is 9.

In a possible implementation, the polyphase windings are three-phase symmetrical windings, a spatial phase difference between each two-phase windings is 120°, and a wire connection manner of the three-phase windings is a stellate connection or an angular connection.

A second aspect of the present invention provides an electric motor, including the stator assembly provided by any one of the technical solutions of the first aspect, where the stator assembly is installed inside the electric motor.

A third aspect of the present invention provides a vehicle, including the stator assembly provided by any one of the technical solutions of the first aspect installed in the electric motor of the vehicle or the electric motor provided by the second aspect connected to a transmission system of the vehicle.

The beneficial effects provided by the second and third aspects of the present invention are substantially the same as those provided by the first aspect of the present invention, and will not be described in detail here.

### BRIEF DESCRIPTION OF DRAWINGS

In order to explain the technical scheme in embodiments of the present application or the prior art more clearly, the drawings needed to be used in the description of the embodiments or the prior art will be briefly introduced below. Obviously, the drawings in the following description are some embodiments of the present application, and for those skilled in the art, other embodiments can be obtained according to these drawings without paying creative effort.
FIG. 1 is a schematic structural diagram of a stator assembly provided by an embodiment of the present invention.
FIG. 2 is a schematic structural diagram of a lead end of the stator assembly in FIG. 1.
FIG. 3 is a schematic structural diagram of a non-lead end of the stator assembly in FIG. 1.
FIG. 4 is a schematic structural diagram of a stator slot on a stator core in FIG. 1.
FIG. 5 is a schematic structural diagram of a first branch of A-phase in polyphase windings in FIG. 1.
FIG. 6 is an expansion diagram of partial windings of the first branch of A-phase in FIG. 5.
FIG. 7 is a cross-sectional view of three branches of A-phase in the polyphase windings in FIG. 1.
FIG. 8 is an expansion diagram of partial windings of three-phase windings in the polyphase windings in FIG. 1.
FIG. 9 is a schematic diagram of phase band distribution of polyphase windings provided by an embodiment of the present invention.
FIG. 10 is a schematic diagram of a winding pattern of a first branch windings A1X1 of A-phase provided by an embodiment of the present invention.
FIG. 11 is a schematic diagram of a winding pattern of a second branch windings A2X2 of A-phase provided by an embodiment of the present invention.
FIG. 12 is a schematic diagram of a winding pattern of a third branch windings A3X3 of A-phase provided by an embodiment of the present invention.
FIG. 13 is a schematic diagram of three-phase windings with a stellate connection provided by an embodiment of the present invention.
FIG. 14 is a schematic diagram of three-phase windings with an angular connection provided by an embodiment of the present invention.
FIG. 15 is structural schematic diagram of a circulating current simulation verification circuit provided by an embodiment of the present invention.
FIG. 16 is a diagram showing a result of currents of three branches of A-phase provided by an embodiment of the present invention.
FIG. 17 is a diagram showing a result of circulating currents of three branches of A-phase provided by an embodiment of the present invention.

### Reference numbers:

100- stator core;
110- stator slot;
111- adjacent slot layer; 112- separated slot layer;
200- polyphase windings;
210- lead end; 220- non-lead end;
230- A-phase windings;
231- winding portion; 232- connecting section; 233- integer pitch unit;
234- short pitch unit; 235- long pitch unit;
240- three-phase windings.

### DESCRIPTION OF EMBODIMENTS

The following is an overview of the topic described in detail in this article. This summary is not intended to limit a scope of protection of claims.

As the background technology states, a stator assembly is an important component of an electric motor. In electric vehicles, the electric motor needs to meet requirements of light weight, high power density and high efficiency. At present, a flat wire motor is widely used as a mainstream motor windings. Compared with a round wire motor, the flat wire has a higher motor slot fullness rate. That is, under the condition that the size and number of stator slots remain constant, more copper wires can be filled in the stator slots, enabling them to carry a larger current and generate a stronger magnetic field, thereby increasing power density.

In related technologies, the windings form of the flat wire motor mainly adopts hair-pin (Hair-pin) windings. After being connected to the stator core, a lead end extending relative to an end portion of the stator core need to be welded, which leads to problems such as long lead ends and large material loss of the end portion. After research by inventors, it was found that main reasons for this problem lie in: in related technologies, the Hair-pin windings resembling a hair-pin needs to be formed first and then inserted into the stator slots of the stator core, and leads of the lead end of the windings need to be welded and connected. However, in this way, an extension size of the lead end relative to the end portion of the stator core is relatively long. Specifically, circumferential intervals of each lead at the lead end are located in different slot layers of the stator core and/or the stator slots of the stator core, resulting in an unreasonable distribution layout of leads at the lead end, which is not conducive to the subsequent welding process.

An embodiment of the present invention provides the stator assembly. By winding continuous windings around the stator slots of the stator core, specifically utilizing a specific winding direction and the number of turns of a connected first coil section and second coil section along an outer circumferential direction of the stator core, and controlling and changing different types of winding pitches of a winding portion and a connecting section contained in the first and second coil sections within a slot layer, the stator assembly containing a specific winding form is formed. Compared with the hair-pin (hair-pin) windings in the mainstream related technology, a length size of a lead end extending from an end portion of the stator core is significantly reduced, thereby improving a convenience of wire connection.

Moreover, the above-mentioned winding manner enables windings arranged in the same stator slot to all belong to the same phase, thereby eliminating insulating paper for isolating windings of different phases arranged in the same stator slot, improving a slot fullness rate of the electric motor, improving the power density of the electric motor, and reducing the insulation cost of the electric motor. In addition, the above winding manner can also make magnetic circuits of each branch in windings of each phase completely symmetrical, eliminating a circulating current problem caused by an asymmetric structure, improving efficiency of the electric motor and reducing temperature rise of the electric motor. Moreover, since the insulating paper in the same stator slot is eliminated, a wire insertion process of polyphase windings is simplified, a manufacturing efficiency of the electric motor is improved, and an insulation cost of the electric motor is reduced.

Here, exemplary embodiments will be described in detail, and its example is shown in the drawings. When the following description involves drawings, unless otherwise indicated, the same numbers in different drawings represent the same or similar elements. Embodiments described in the following exemplary embodiments do not represent all embodiments consistent with the present application. On the contrary, they are merely examples of devices and methods that are consistent with some aspects of the present application as detailed in claims.

In order to make the above-mentioned purposes, features and advantages of the embodiments of the present invention more obviously and easily to understand, the technical solutions in the embodiments of the present invention will be clearly and completely described below with reference to the drawings in the embodiments of the present invention. Obviously, the described embodiments are only a part of the embodiments of the present invention, rather than all the embodiments. Based on the embodiments of the present invention, all other embodiments obtained by ordinary technicians in this field without making any creative work shall fall within the scope of protection of the present invention.

First, relevant technical terms in the electric motor involved in the embodiments of the present application are explained and illustrated.

The number of poles of the electric motor, that is, the number of magnetic poles of the electric motor, a magnetic pole is divided into N pole and S pole. Generally, one N pole and one S pole are called a pair of magnetic poles, that is, the number of pole pairs (P) of the electric motor is 1.

The number of slots per pole per phase, the number of slots occupied by windings of each phase under each magnetic pole is called the number of slots per pole per phase.

The number of phases of the electric motor, where "phase" generally refers to the number of phase wires (that is, live wires) used. For instance, a three-phase motor uses three phase wires. The number of phases of an electric motor is usually defined by the number of outlets (excluding neutral line) on a stator side of the electric motor.

Phase band of the electric motor, that is, the number of slots continuously occupied by each pole and windings of each phase on a stator core.

Slot fullness rate refers to a ratio of the cross-sectional area of a conductor in a slot of a stator core to the effective area of a slot body.

Pole pitch of the electric motor, that is, a distance between two adjacent magnetic poles along a surface of a stator core.

Span, also known as pitch, refers to a distance that two effective sides of a same conductor in windings of an electric motor pitch over an armature surface, and is usually expressed by the number of slots.

Integer pitch, that is, a pitch is equal to the pole pitch; short pitch, that is, a pitch is less than the pole pitch; long pitch, that is, a pitch is greater than the pole pitch.

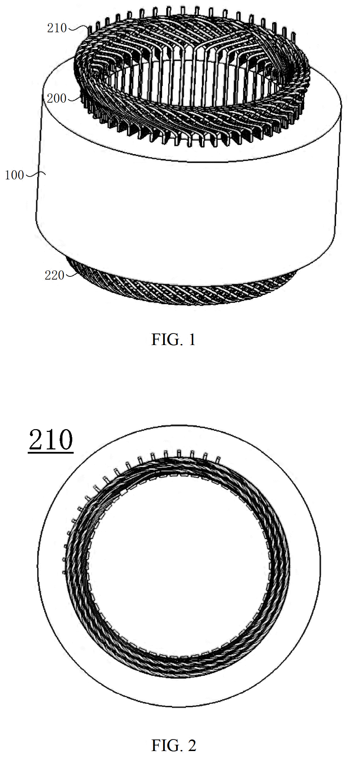

In a first aspect, with reference to FIG. 1, FIG. 2, FIG. 3, and FIG. 4, an embodiment of the present invention provides a stator assembly, which is applied to an electric motor. The stator assembly includes a stator core 100 and polyphase windings 200 that surround the stator core 100. The stator core 100 is provided with multiple stator slots 110 along a circumferential direction thereof. Each stator slot 110 has M slot layers arranged in a radial direction of the stator core 100, where M is greater than or equal to 4 and is an even number.

Windings of each phase include N branches connected in parallel, and each branch includes a first coil section and a second coil section which are connected. A line section of the first coil section is wound around the stator core 100 for M/2 turns in a first direction, and a line section of the second coil section is wound around the stator core 100 for M/2 turns in a second direction, where the first direction and the second direction are different, and N is less than or equal to M.

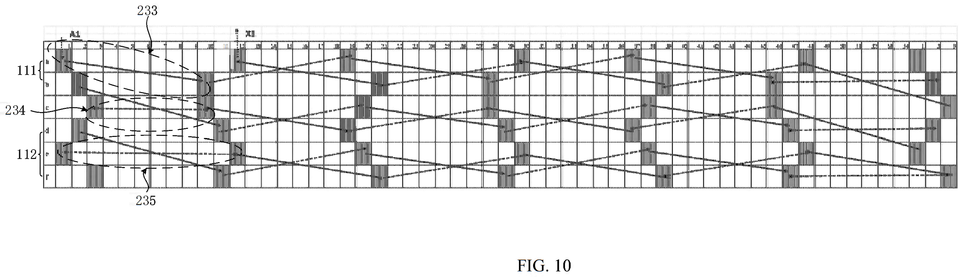

Each of the first coil section and the second coil section includes Q winding portions 231 and Q connecting sections 232. The Q winding portions 231 are arranged in the circumferential direction of the stator core 100. Each connecting section 232 connects two adjacent winding portions 231, such that the winding portions 231 and the connecting section 232 form multiple variable-pitch units in corresponding slot layers, where Q = M/2*2P=M*P, and P is a number of pole pairs of the electric motor. The slot layers corresponding to the two adjacent winding portions 231 are one of the same layer, adjacent layers, or separated layers. For example, with reference to FIG. 10-FIG. 12, adjacent slot layers 111 can be layer a and layer b, and separated slot layers 112 can be layer b and layer d, or layer d and layer f, or can be any other two slot layers separated by one layer or multiple layers.

The multiple variable-pitch units include one or more of a short pitch unit 234, an integer pitch unit 233 and a long pitch unit 235, where a span of the short pitch unit 234 is smaller than a pole pitch of the electric motor, a span of the integer pitch unit 233 is equal to the pole pitch of the electric motor, and a span of the long pitch unit 235 is larger than the pole pitch of the electric motor.

In this way, by winding continuous windings around the stator slots of the stator core, specifically utilizing a specific winding direction and the number of turns of a connected first coil section and second coil section along an outer circumferential direction of the stator core, and controlling and changing different types of winding pitches of the winding portions 231 and the connecting sections 232 contained in the first and second coil sections within the slot layer, the stator assembly containing a specific winding form is formed. Compared with the hair-pin (hair-pin) windings in the mainstream related technology, sizes of end portions of the windings are reduced, and a non-lead end 220 does not need to be welded, which also improves a convenience of subsequent wire connection of a lead end.

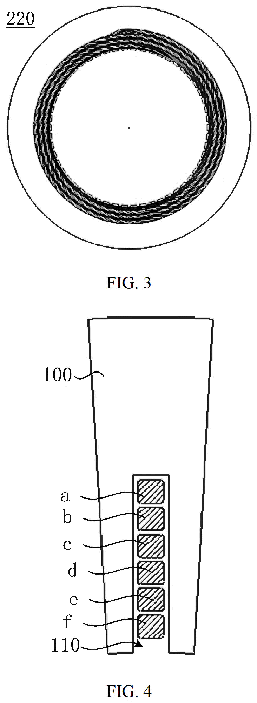

Continuing to refer to FIG. 4, the stator slot 110 can have 6 slot layers. Along a direction from the bottom of the slot to a slot opening, these 6 slot layers can be layer a, layer b, layer c, layer d, layer e, and layer f in sequence. For instance, the slot layer a, which is a first slot layer, is located on an innermost side of the stator slot 110, and the f slot layer, which is a sixth slot layer, is on an outermost side of the stator slot 110. It is understandable that the slot layer a can also be on the outermost side of the stator slot 110, and the slot layer f can also be on the innermost side of the stator slot 110. It should be noted that the slot layers can be understood as a space set in sequence in a depth direction of the same stator slot 110 for winding wiring. The space can be a virtual space in the stator slot 110, so as to describe a position of the windings in the stator slot 110 in the depth direction of the stator slot 110 when the windings are wired in the stator slot 110.

It should be noted that the polyphase windings 200 is multiple phase windings, and the polyphase windings are different from each other in electrical phase. Exemplarily, the polyphase windings 200 can be three-phase windings 240, a winding pattern of the three-phase windings 240 on the stator core 100 can be the same and a spatial phase difference thereof is 120°, that is, the polyphase windings 200 can include three phase windings, such as A-phase windings 230, B-phase windings and C-phase windings. A wire connection manner of the three-phase windings 240 may be a stellate connection or an angular connection.

Exemplarily, the first direction may be a clockwise direction when viewed from the lead end 210, and the second direction may be a counterclockwise direction when viewed from the lead end 210. It is understandable that the first direction and the second direction may also be interchanged.

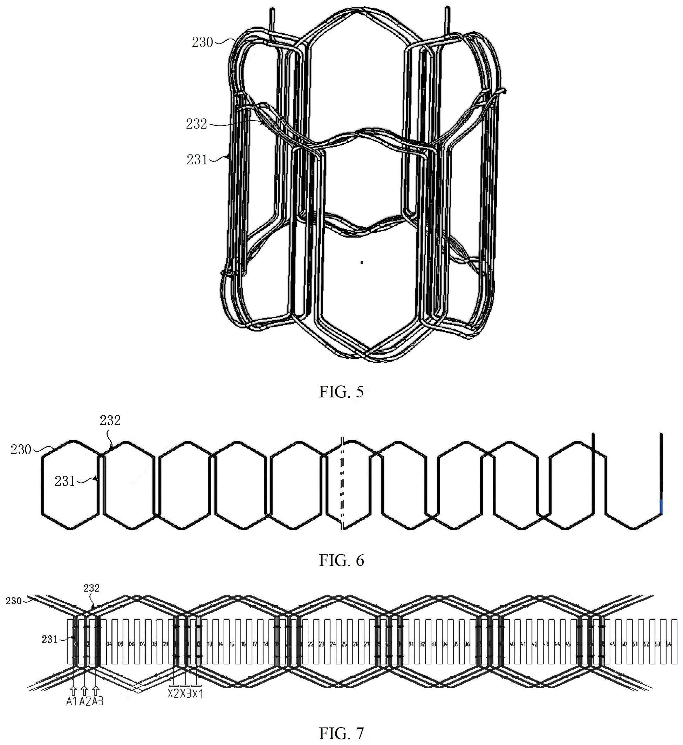

As a possible embodiment, the first coil section and the second coil section are connected by a connected segment, and a winding direction of the connected segment is the same as the first direction. For example, in combination with FIG. 5, FIG. 6, and FIG. 10, the first direction is a counterclockwise direction along the circumferential direction of the stator core. In a first branch A1X1 of winding phase A, the first coil section is wound into a first stator slot of the layer a of the slot layers and then wound for three turns in the counterclockwise direction to 47f, that is, the 47th stator slot of the lot layer f of the slot layers. The connected segment is a coil section between 47f and 3f, and its winding direction is the same as the first direction, that is also in a counterclockwise direction. This design facilitates reducing the length of the lead end 210 of the second coil section extending along the stator slot and facilitates its arrangement on the same layer as the lead end 210 of the first coil section extending into the stator slot. An end of the stator core 100 opposite the lead end 210 is a non-lead end 220.

In some embodiments, the first direction and the second direction are opposite. In combination with FIG. 10, FIG. 11, and FIG. 12, a winding layout of the three branches is that the first coil section wound around the stator core for three turs in the first direction is connected to the second coil section wound around the stator core for three turns in a opposite direction of the first direction. In this way, by winding the first coil section and the second coil section of a single branch around the stator core in opposite directions, a specific optimization effect is achieved on the wire winding layout, which further helps to reduce the size of the lead end 210.

In more possible embodiments, referring to FIG. 1 and FIG. 2, the lead end 210 of the first coil section and the lead end 210 of the second coil section are located in a same slot layer. With this design, compared with arrangements in different layers, multiple leads of the lead end 210 arranged in the same layer significantly improve a process convenience of their subsequent connection. Moreover, the lead end 210 of the multiple first coil sections and the lead end 210 of the multiple second coil sections of the polyphase and multi-branch circuit are all located in the same slot layer and arranged adjacent to each other along the circumferential direction of the stator core, further improving a connection convenience of windings and reducing the size of the lead end 210 of the polyphase windings 200.

Based on the above embodiments, it can be improved that the lead end 210 of the first coil section and the lead end 210 of the second coil section are located in an innermost layer or an outermost layer of the slot layer. Refer to FIG. 4 and FIG. 9 - FIG. 12, that is, the lead end 210 of the first coil section and the lead end 210 of the second coil section are located in layer a or layer f. The lead ends 210 are arranged at the innermost layer or the outermost layer of the slot layer, which is more convenient for connection operation between the leads than other layers, and is beneficial to a stability of current transmission after the circuit is turned on.

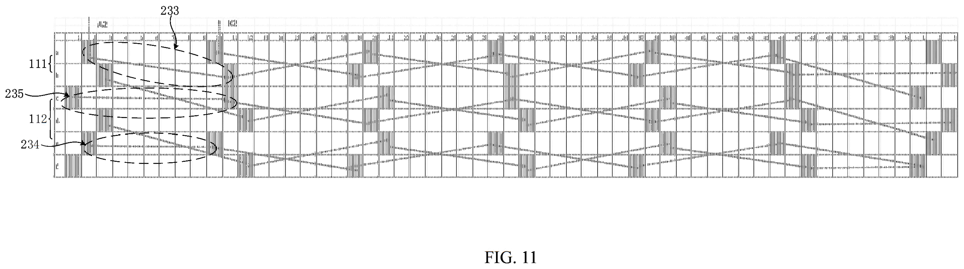

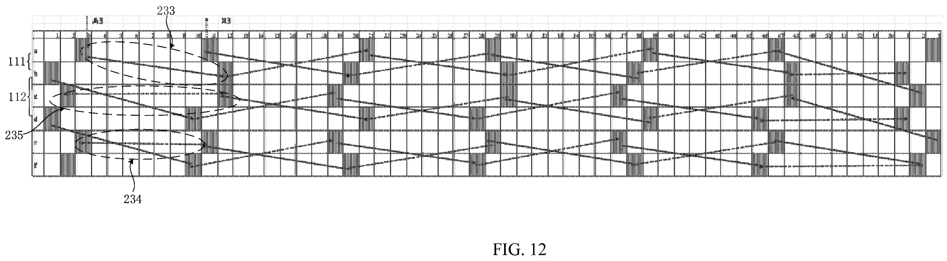

In some embodiments, a span y1 of the short pitch unit 234 is equal to τ-1 or τ-2, and a span y1 of the long pitch unit 235 is equal to τ +1 or τ +2, where τ is the pole pitch of the electric motor. For example, the pole pitch τ is 9. In combination with FIG. 10, 12e→1e crosses the long pitch unit 235, and the long pitch unit 235 is τ +2=11. In combination with FIG. 11, 10e→2e crosses the short pitch unit 234, and the short pitch unit 234 is τ -1=8. In this way, diversity of a pitch unit scale is further ensured to further ensure the minimization of the size of the lead end 210 after the windings are wound around the stator core and simplify the winding arrangement.

It should be noted that the first coil section and the second coil section are wound on the stator core 100 for multiple turns, and the total number of turns of the first coil section and the second coil section needs to be adjusted according to the number of stator slots 110 and the pole pitch of the electric motor.

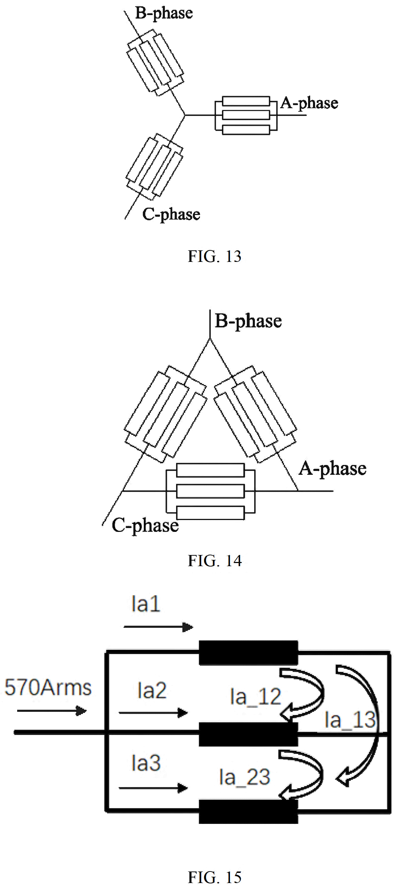

As a possible embodiment, referring to FIG. 13 and FIG. 14, the polyphase windings include three-phase windings 240, a spatial phase difference between each two-phase windings is 120°, and a wire connection manner of the three-phase windings 240 is a stellate connection or an angular connection to meet different electrical characteristics, torque output and efficiency requirements of the electric motor.

To facilitate understanding of the technical solution of the embodiment of the present application, the technical solution of the embodiment of the present application will be described below by taking the polyphase windings 200 in which the number of phases m is 3, the number of poles 2P is 6, the number of slots Q of the stator slots 110 is 54, the number of slot layers M of each stator slot 110 is 6, the number of slots per pole per phase q is 3, the pole pitch τ is 9, and windings of each phase includes 3 branches as an example.

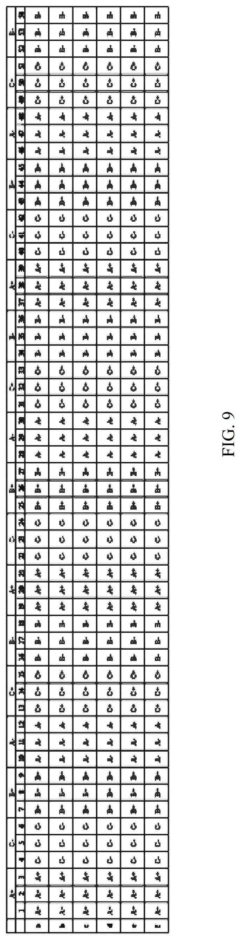

First, the phase band of the polyphase windings 200 are divided. The schematic diagram of phase band division is shown in FIG. 9.

Referring to FIG. 12 to FIG. 16, a first winding portion 231 of a first branch A1X1 of A-phase can be entered from a slot layer a of a first stator slot 110 corresponding to a first magnetic pole (i.e., 1a), and gradually wind along a first direction to a slot layer b of a 46th stator slot 110 on a circumferential direction of a stator core 100 with different spans (the number of slots crossed between two adjacent winding portions 231, for example, 28b-37a, the span is 9, the integer pitch is τ ). Then, it continues to wind for two turns along the first direction to a slot layer f corresponding to a 47th stator slot 110. After that, it winds to 3f through a connected segment connecting to a first coil section, and then winds for three more turns in a opposite direction to 12a and is led out from the corresponding stator slot 110. The specific winding manner of the first branch A1X1 is as follows.

Refer to FIG. 10,
1a→10b→19a→28b→37a→46b→2b→11d→20c→29d→38c→47d→2d→11f→20e →29f→38e→47f→3f-48e→39f→30e→21f→12e→ le→46c→37d-28c→19d-10c→3c→ 48a→39b→30a→21b→12a→.

It should be noted that the first coil section is a line section:
1a→10b→19a→28b→37a→46b→2b→11d→20c→29d→38c→47d-2d-11f→20e →29f→38e→47f.

The second coil section is a line section:
3f→48e→39f→30e-21f→12e→ le→46c→37d-28c-19d→10c→3c→48a→39b →30a→21b→12a.

The connected segment is a line section between 47f and 3f, and the total number of turns of the first coil section and the second coil section are 3 respectively.

Referring to FIG. 11, a winding manner of a second branch A2X2 is as follows:
2a→11b→20a-29b→38a→47b→3b→12d-21c→30d→39c→48d→3d-12f→21e →30f→39e→48f→1f→46e→37f→28e→19f→10e→2e→47c→38d→29c→20d-11c-1c→ 46a→37b→28a→19b→10a→, where the first coil section is a line section of 2a-11b-20a-29b→38a→47b→3b→12d→21c→30d→39c→48d→3d→12f→21e→30f→39e→48f, the connected segment is a line section between 48f and 1f, the second coil section is a line section of 1f→46e→37f→28e→19f→10e→2e→47c→38d→29c→20d→11c→1c→46a→37b→28a→19b → 10a-, and the total number of turns of the first coil section and the second coil section are 3 respectively.

Referring to FIG. 12, a winding manner of a third branch A3X3 is as follows:
3a→12b→21a-30b→39a-48b→1b→10d→19c→28d→37c→46d→1d→10f→ 19e→28f→37e→46f→2f→47e→38f→29e→20f→Ile→3e→48c→39d→30c→21d→12c→2c →47a→38b→29a→20b→1a→, where the first coil section is 3a-12b-21a-30b-39a-48b →1b→10d→19c→28d→37c→46d→1d→10f→19e→28f→37e→46f, the connected segment is a line section between 46f and 2f, the second coil section is 2f→47e→38f→29e→20f→11e→3e →48c→39d→30c→21d→12c→2c→47a→38b→29a→20b→11a→.

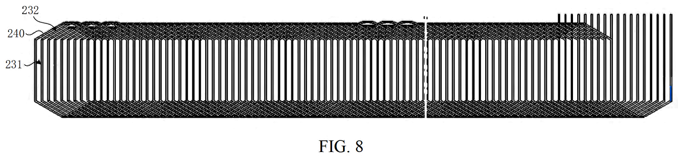

Referring to FIG. 7 and FIG. 8, expansion diagrams of windings respectively show an expansion diagram of A-phase windings 230 and a three-phase expansion diagram. B-phase windings and C-phase windings are wound in the same manner as the A-phase windings 230, with a spatial phase difference of 120°. Specifically, B-phase is shifted by q (i.e., 3) stator slots 110 relative to the A-phase, and C-phase is shifted by q stator slots 110 relative to the B-phase.

Referring to FIG. 13 and FIG. 14, the A-phase windings 230, B-phase windings and C-phase windings can be connected in a stellate connection. The A-phase windings 230, B-phase windings and C-phase windings can also be connected in an angular connection.

Through the winding manner in the embodiments of the present invention, in addition to significantly reducing the size of the lead end 210, each branch can traverse the position of the arranged phase band and slot layer, so that electric potentials of the branches remain balanced, there is no circulating current between the branches, an efficiency of the electric motor is improved, and a temperature rise of the electric motor is reduced. In addition, conductors in a same stator slot 110 belong to a same phase, so there is no need to set insulating paper between the conductors, thereby increasing a slot fullness rate, enhancing a power density of the electric motor, and reducing an insulation cost of the electric motor.

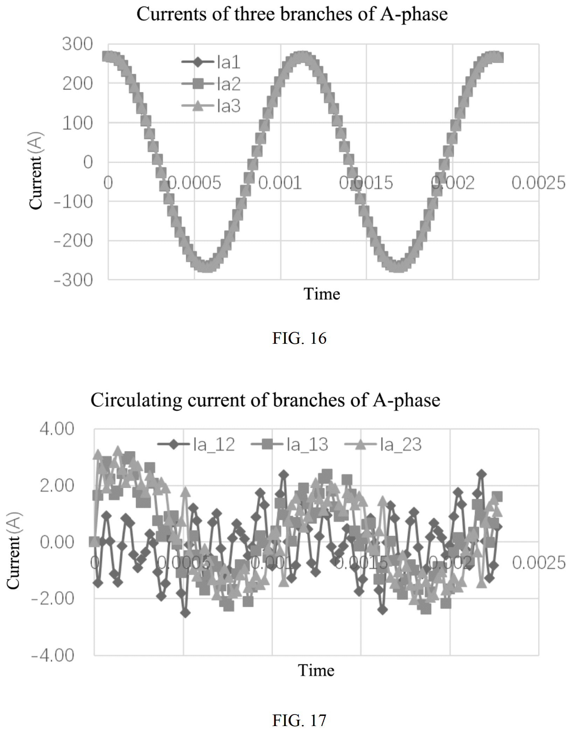

In combination with circulating current simulations of FIG. 15, FIG. 16 and FIG. 17, the relevant experiments and results are verified. The experiment is carried out through a field-circuit coupling simulation of finite element software. A-phase is passed with 570Arms (ampere effective value). Currents of three branches of A-phase are shown in FIG. 16. The currents of the three branches are basically symmetrical, and effective values of the currents are 192.32Arms, 192.54Arms, and 193.12Arms respectively. In the related art, effective values of currents of branches of a single-phase in a form of windings are quite different, that is, generated circulating currents Ia12, Ia13, and Ia23 of branches are relatively large. By contrast, the circulating currents of the branches measured in the embodiment of the present invention are shown in FIG. 17, effective values of the circulating currents of the branches are 1.00 Arms, 1.40 Arms, and 1.51 Arms, respectively. The circulating currents are only 0.78% of the currents of the branches. According to Ohm's law, a loss is proportional to a square of a current. Therefore, an intensity of the circulating currents of the branches is very small and can be ignored. This verifies that the branches of the stator assembly provided in the embodiment of the present invention are symmetrical and have the same potential, which avoids the negative effects of the circulating current.

The stator assembly provided in the embodiments of the present application can be applied to an electric vehicle/device (Electric Vehicle, referred to as EV), a pure electric vehicle device (Pure Electric Vehicle/Battery Electric Vehicle, referred to as PEV/BEV), a hybrid electric vehicle (Hybrid Electric Vehicle, referred to as HEV), a range extended electric vehicle (Range Extended Electric Vehicle, referred to as REEV), a plug-in hybrid electric vehicle (Plug-in Hybrid Electric Vehicle, referred to as PHEV), and a new energy vehicle (New Energy Vehicle).

In a second aspect, an embodiment of the present invention provides an electric motor, including the stator assembly provided by any one of the schemes in the first aspect. An extended end of a winding wire of the stator assembly, that is, a lead end, can be connected to the terminal box or control system of the electric motor for a purpose of connecting power and controlling signals. A connection method is plug-in or threaded connection to achieve a reliable connection and ensure the electric motor is running normally.

In a third aspect, an embodiment of the present invention provides a vehicle, including the stator assembly provided by any one of the schemes in the first aspect or the electric motor provided by the second aspect, where the stator assembly is installed in the electric motor, and the electric motor is connected to a transmission system inside the vehicle to provide a stable driving force for the vehicle.

Therefore, the second and third aspects also have the advantages of the stator assembly of any one of the schemes of the first aspect, and the embodiments of the present invention will not be described in detail.

In the description of the present invention, it should be understood that the terms "up", "down", "front", "back", "left", "right", "vertical", "horizontal", "top", "bottom", "inside", "outside", etc., indicating directions or positional relationships, are based on the directions or positional relationships shown in the drawings, and are only for the convenience of describing the present invention and simplifying the description, rather than indicating or implying that a device or element referred to must have a specific direction, be constructed and operated in a specific direction, and therefore should not be understood as limiting the present invention.

In addition, the terms "first" and "second" are used for descriptive purposes only and should not be understood as indicating or implying relative importance or implicitly indicating the quantity of the indicated technical features. Therefore, features defined as "first" or "second" may explicitly or implicitly include at least one of the features. In the description of the present invention, "multiple" means at least two, for example, two, three, etc., unless otherwise clearly and specifically defined.

In the present invention, unless otherwise clearly specified and limited, the terms "installed", "connected", "linked", "fixed" and the like should be understood in a broad sense. For example, it can be a fixed connection, a detachable connection, or an integrated connection; it can be a mechanical connection or an electrical connection; it can be a direct connection or an indirect connection through an intermediate medium; it can be an internal connection of two elements or an interaction relationship between two elements, unless otherwise clearly defined. For those skilled in the art, the specific meanings of the above terms in the present invention can be understood according to specific circumstances.

In the present invention, unless otherwise clearly specified and limited, a first feature being "on" or "under" a second feature may mean that the first and second features are in direct contact, or the first and second features are in indirect contact through an intermediate medium. Moreover, the first feature being "above", "upper" and "upper surface" the second feature may mean that the first feature is directly above or obliquely above the second feature, or simply means that the first feature is horizontally higher than the second feature. The first feature being "below", "downward", and "downside" the second feature may mean that the first feature is directly below or obliquely below the second feature, or simply means that the first feature is at a smaller horizontal height than the second feature.

The various embodiments or implementation methods in this specification are described in a progressive manner. Each embodiment focuses on the differences from other embodiments, and the same or similar parts between the various embodiments can be referenced to each other.

It should be noted that the embodiments represented by "one embodiment", "an embodiment", "exemplary embodiment", "some embodiments", etc. mentioned in the specification may include a specific feature, a structure, or a characteristic, but not every embodiment necessarily includes the specific feature, structure, or characteristic. Moreover, such phrases are not necessarily referring to the same embodiment. Furthermore, when describing the specific feature, structure, or characteristic in combination with embodiments, it is within the knowledge of those skilled in the art to implement such features, structures, or characteristics in combination with other embodiments that are explicitly or implicitly described.

Finally, it should be noted that the above embodiments are only used to illustrate technical solutions of the present invention, rather than to limit it. Although the present invention has been described in detail with reference to the above embodiments, those skilled in the art should understand that they can still modify the technical solutions described in the above embodiments, or replace partial or all of the technical features therein with equivalents. These modifications or replacements do not cause the essence of the corresponding technical solutions to deviate from the scope of the technical solutions of the embodiments of the present invention.

After reading and understanding the drawings and detailed description, other aspects can be understood.

## Claims

1. A stator assembly, comprising a stator core and polyphase windings that surround the stator core, the stator core is provided with multiple stator slots along a circumferential direction thereof, each stator slot has M slot layers arranged in a radial direction of the stator core, wherein M is greater than or equal to 4 and is an even number;
windings of each phase comprise N branches connected in parallel, and each branch comprises a first coil section and a second coil section which are connected; a line section of the first coil section is wound around the stator core for M/2 turns in a first direction, and a line section of the second coil section is wound around the stator core for M/2 turns in a second direction, wherein N is less than or equal to M and the first direction and the second direction are different;
each of the first coil section and the second coil section comprises Q winding portions and Q connecting sections, the Q winding portions are arranged in the circumferential direction of the stator core, each connecting section connects two adjacent winding portions, such that the winding portions and the connecting section form multiple variable-pitch units in corresponding slot layers, wherein Q =M*P, and P is a number of pole pairs of the electric motor; the slot layers corresponding to the two adjacent winding portions are one of the same layer, adjacent layers, or separated layers;
the multiple variable-pitch units comprise one or more of a short pitch unit, an integer pitch unit and a long pitch unit, wherein a span of the short pitch unit is smaller than a pole pitch of the electric motor, a span of the integer pitch unit is equal to the pole pitch of the electric motor, and a span of the long pitch unit is larger than the pole pitch of the electric motor.

2. The stator assembly according to claim 1, wherein the first coil section and the second coil section are connected by a connected segment, and a winding direction of the connected segment is the same as the first direction.

3. The stator assembly according to claim 1, wherein the first direction and the second direction are opposite.

4. The stator assembly according to claim 2 or 3, wherein a lead end of the first coil section and a lead end of the second coil section are located in a same slot layer.

5. The stator assembly according to claim 4, wherein the lead end of the first coil section and the lead end of the second coil section are located in an innermost layer or an outermost layer of the slot layer.

6. The stator assembly according to claim 1, wherein a span y1 of the short pitch unit is equal to τ-1 or τ-2, a span y1 of the long pitch unit is equal to τ+1 or τ+2, and a span y1 of the integer pitch unit is equal to τ, wherein τ is the pole pitch of the electric motor.

7. The stator assembly according to claim 1, wherein a number of the stator slots is 54, the number of magnetic poles is 6, and the pole pitch is 9.

8. The stator assembly according to claim 1, wherein the polyphase windings are three-phase symmetrical windings, a spatial phase difference between each two-phase windings is 120°, and a wire connection manner of the three-phase windings is a stellate connection or an angular connection.

9. An electric motor, comprising the stator assembly according to any one of claims 1 to 8 installed in the electric motor.

10. A vehicle, comprising the stator assembly according to any one of claims 1 to 8 installed in the electric motor of the vehicle or the electric motor according to claim 9 connected to a transmission system of the vehicle.
